# EUROPÄISCHE PATENTSCHRIFT

(11) **EP 1 468 216 B1**
(45) Veröffentlichungstag und Bekanntmachung des Hinweises auf die Patenterteilung: **18.07.2007**
(21) Anmeldenummer: 02795162.3
(22) Anmeldetag: 12.12.2002
(51) Int. Cl.: F16L 5/02, F16L 5/08

(54) **DICHTUNGSVORRICHTUNG**
SEALING DEVICE
DISPOSITIF D'ÉTANCHÉITE

(30) Priorität: 11.01.2002 DE 20200374 U
(43) Veröffentlichungstag der Anmeldung: 20.10.2004
(73) Patentinhaber: Doyma GmbH & Co, 28876 Oyten (DE)
(72) Erfinder: RISCH, Ronald, 28816 Stuhr (DE); WULFES, Andreas, 28876 Oyten (DE); PORTHAUS, Bodo, 27711 Osterholz-Scharmbeck (DE)
(74) Vertreter: Eisenführ, Speiser & Partner
(86) Internationale Anmeldenummer: PCT/EP2002/014108
(87) Internationale Veröffentlichungsnummer: WO 2003/058107

(56) Entgegenhaltungen:
- EP-A- 1 164 677
- WO-A-98/15765
- DE-C- 767 341
- DE-U- 9 100 216

## Beschreibung

Die vorliegende Erfindung betrifft eine Dichtungsvorrichtung zum abdichtenden Durchführen einer Leitung durch eine Öffnung, insbesondere durch einen in einer Wand ausgebildeten Durchbruch, mit einem verformbaren Dichtungselement mit einer Bohrung, die die Leitung aufnimmt, und mit einer Spannvorrichtung mit mindestens einem Spannelement mit einer axial seitlichen Spannoberfläche zum Spannen des Spannelements gegen eine axial seitliche Spannoberfläche des Dichtungselements derart, dass der Dichtungselement im gespannten Zustand an die Leitung und/oder die Innenwand der Öffnung dichtend angepresst wird.

Derartige Dichtungsvorrichtungen sind bekannt und werden verwendet, um Leitungen, bei denen es sich um Versorgungsleitungen für Gas, Wasser, Elektrizität oder andere Medien handeln kann, durch Durchbrüche in Wänden, Decken oder ähnliches abdichtend hindurchzuführen. Im montierten, abgedichteteh Zustand ist das zumeist elastisch verformbare Dichtungselement radial nach innen an die äußere Spannoberfläche der durchgeführten Leitung und radial nach außen an die innere Spannoberfläche der Durchbruchsöffnung angepresst und sorgt auf diese Weise für eine Abdichtung.

Der bekannten Dichtungsvorrichtung liegt dabei der Mechanismus zugrunde, durch mindestens ein Spannelement leitungsaxial auf das verformbare Dichtungselement Druck auszuüben, es zusammenzuquetschen und das dadurch erfolgende leitungsradiale Ausweichen des Dichtungsvolumens sowohl nach innen als auch nach außen zu nutzen, um die Abdichtung gegen die Leitung (radial nach innen) sowie gegen die Durchbruchsöffnung (radial nach außen) zu gewährleisten.

Dieser Mechanismus funktioniert soweit zuverlässig, hat bekanntermaßen jedoch zur Voraussetzung, dass der Außendurchmesser der Leitung sowie der Innendurchmesser der Durchbruchsöffnung möglichst eng toleriert eine Spielpassung mit dem Innen- und Außendurchmesser des Dichtungselementes bilden. Dies ist für eine zuverlässige Dichtung deshalb erforderlich, weil der bekannte Mechanismus die radiale Innen- und Außenfläche des Dichtungselementes nur unbeträchtlich verdrängt, so dass größere Durchmesserdifferenzen, Unebenheiten oder Beschädigungen an der Leitungsaußenfläche oder der Öffnungsinnenfläche zu mangelhafter Dichtung führen können.

Aus den beschriebenen Gründen erfordern die bekannten Dichtungsvorrichtungen zu ihrer Anwendbarkeit auf Leitungsrohre mit einer Serie genormter Außendurchmesser in aller Regel für jeden der Außendurchmesser ein eigenes Dichtungselement mit entsprechenden Dimensionen.

Eine Dichtungsvorrichtung gemäß dem Oberbegriff des Anspruchs 1 ist aus DE 9 100 216 U und US 3 964 754 bekannt.

Der vorliegenden Erfindung liegt die Aufgabe zugrunde, eine Dichtungsvorrichtung zum abdichtenden Durchführen mindestens einer Leitung durch eine Öffnung zu schaffen, deren Dichtungswirkung verbessert und insbesondere im größeren Durchmesserbereich der Leitung und der Öffnung zuverlässig gewährleistet ist.

Diese Aufgabe wird erfindungsgemäß von einer Dichtungsvorrichtung mit den Merkmalen des Anspruchs 1 gelöst. Bevorzugte Ausgestaltungen der Erfindung sind in den Unteransprüchen angegeben.

Die erfindungsgemäße Dichtungsvorrichtung weist ein vorzugsweise elastisch verformbares Dichtungselement, vorzugsweise einen Dichtungsring, z. B. aus einem Elastomer auf, durch dessen Bohrung eine Leitung hindurchführbar ist. Die Außenkontur des Dichtungselementes ist in eine Öffnung, insbesondere in einen Durchbruch, der in einer Wand ausgebildet ist, einsetzbar. Das Volumen des Dichtungselementes lässt sich erfindungsgemäß mittels einer Spannvorrichtung radial nach innen und nach außen drängen und dichtet so die Spalten zwischen der Leitung, dem Dichtungselement und der Öffnung. Dazu weist die Spannvorrichtung mindestens ein Spannelement, vorzugsweise einen Spannring, auf, das sich axial seitlich mit einer Spannoberfläche gegen eine axial seitliche Spannoberfläche des Dichtungselementes pressen lässt. Vorzugsweise weist die Spannvorrichtung zwei solcher Spannelemente auf, die axial jeweils von einer Seite gegen das Dichtungselement spannbar sind, so dass dieser von beiden Seiten sich axial zusammenpressen lässt. Dabei ist das Dichtungselement so ausgebildet, dass es in gespanntem Zustand verformt die Außenwand mindestens eine Leitung und/oder die Innenwand der Öffnung dichtend kontaktiert. Zu besonders großvolumiger Verdrängung des Dichtungselements von seinen axialen Seitenflächen zu seiner radialen Spannoberfläche, die die Dichtungsflächen bilden, sind die Spannoberfläche des Dichtungselementes und des Spannelementes, die beim Spannen in Kontakt miteinander geraten, derart ausgebildet, dass die Kontaktfläche zwischen den Spannoberflächen sich beim Spannen vergrößert.

Um die Verteilung der Verdrängung zwischen den Richtungen radial nach innen und radial nach außen in bestimmtem Verhältnis zu verteilen, ist die Kontaktfläche zwischen dem Spannelement und dem Dichtungselement in radialer Richtung außerhalb der Mitte des Dichtungseiement/Querschnittes angeordnet, und zwar in der Richtung weg von der Querschnittsmitte, in die eine stärkere Verdrängung, also eine stärkere Ausbauchung der radialen Dichtungsfläche des Dichtungselementes, stattfinden soll.

Die Erfindung bewirkt vorteilhaft, dass beim Verspannen zunächst eine geringe, und dann eine zunehmende Kraft erforderlich ist, mit der die Dichtungsflächen des Dichtungsringes nach außen gegen die komplementären Dichtungsflächen drücken und demgemäß zunächst ein geringes und später ein größeres Drehmoment beim Anziehen von Spannschrauben aufgewendet werden muss. Darüber hinaus erzeugt die erfindungsgemäße erhöhte Verdrängung des elastischen Dichtungselementes durch das Spannelement, welches vorzugsweise nonkonform zu dem Dichtelement ausgebildet ist, eine lokal erhöhte Anpressung der Dichtungsflächen des Dichtungsringes gegen die komplementären Dichtungsflächen, was einen zuverlässigeren Sitz der Dichtung sowie eine zuverlässigere Dichtungswirkung erzeugt.

Vorzugsweise ist dazu die Spannoberfläche des Dichtungselementes oder des Spannelementes in ihrem Querschnitt konvex. Die jeweils andere Spannoberfläche kann dann z. B. eben ausgebildet sein. Aber auch beide Spannoberflächen können einen konvexen Querschnitt aufweisen. Der konvexe Querschnitt kann dabei eine U-förmige, V-förmige, trapezförmige oder irgendwie konvex geschwungene Kontur haben.

Alternativ oder ergänzend kann die Spannoberfläche des Dichtungselementes eine axial ausgerichtete Nut oder einen axial ausgerichteten Schlitz auf den Umfang des Dichtungselementes aufweisen. Dort hinein kann dann das Spannelement beim Spannen eindringen und die radiale Verdrängung des Dichtungselementvolumens begünstigen.

Die vorliegende Erfindung wird im Folgenden mit Bezug auf die beigefügten Zeichnungen beschrieben.
- Figur 1: zeigt eine Draufsicht auf eine nicht erfindungsgemäße Dichtungsvorrichtung,
- Figur 2: zeigt eine entlang der Linie A -A geschnittene Seitenansicht der Dichtungsvorrichtung gemäß Fig. 1, auch nicht gemäß der Erfindung
- Figur 3: zeigt schematisch eine geschnittene Seitenansicht 1 einer anderen nicht erfindungsgemäßen Dichtungsvorrichtung,
- Figur 4 und 5: zeigen schematisch geschnittene Seitenansichten alternativer Dichtungselemente von erfindungsgemäßen Dichtungsvorrichtungen
- Figur 6, 7 und 8: zeigen schematisch geschnittene Seitenansichten von alternativen Spannelementen erfindungsgemäßer Dichtungsvorrichtungen.

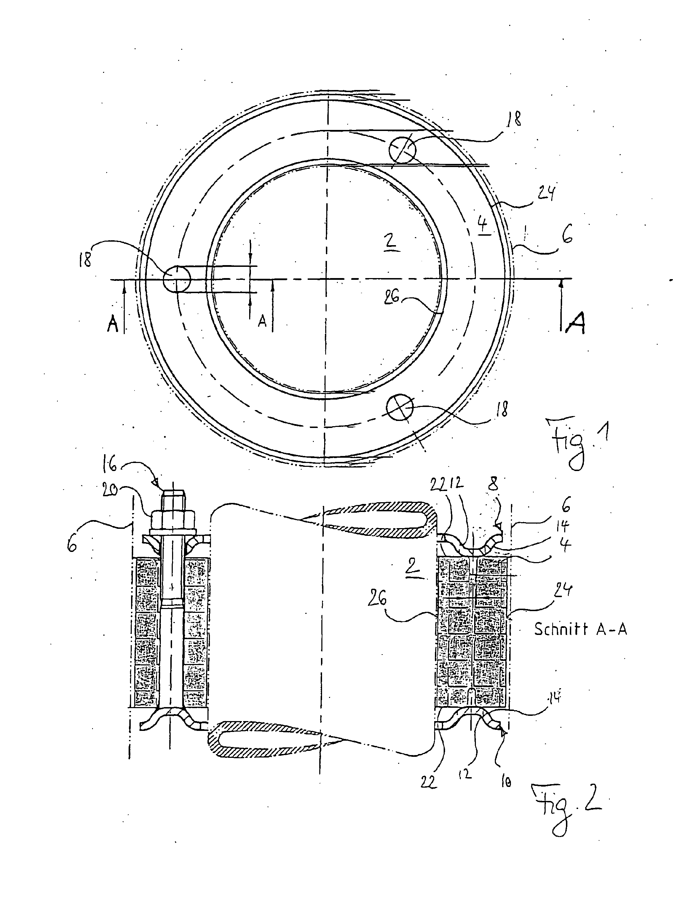

In Fig. 1 und 2 ist eine Rohrleitung 2 erkennbar, die durch einen Gummi-Dichtungselement 4 in Ringform mit rechteckigen Querschnitt hindurch gesteckt ist. Durch strichstrichpunktierte Linien 6 angedeutet ist eine Öffnung 6 in einer Wand, in der wiederum der Dichtungsring 4 steckt. Beidseitig axial gegen den Dichtungsring 4 liegen Spannelemente 8, 10 in Ringform gegen den Dichtungsring 4 an, die aus Blech oder Kunststoff bestehen und mit einem einerseits konvex und andererseits konkav gedrückten Querschnittsprofil mit der konvex geschwungenen Seite 12, 14 gegen den Dichtungsring anliegen. Die Spannringe 8, 10 sind durch drei gleichmäßig auf dem Umfang der Ringe verteilte Schrauben 16 miteinander verbunden, die durch entsprechende Axialbohrungen 18 in dem Dichtungsring 4 hindurchgehen. Mittels Muttern 20 auf den Schrauben 16 lassen sich die Ringe 8, 10 aufeinander zu spannen und drücken dabei ihr konvexes Profil in die axialen Außenflächen 22 auf beiden Seiten des Dichtungsrings 4. Dadurch wird der Dichtungsring 4 so axial von außen zusammengedrückt, dass sein Volumen radial nach außen und nach innen drängt und dadurch die radiale Außenfläche 24 gegen die Innenwand der Öffnung 6 und die radiale Innenwand 26 gegen die Außenwand der Leitung 2 drückt und dichtet.

Die Dichtungsvorrichtung gemäß Fig. 3 unterscheidet sich von der gemäß Fig. 1 und 2 dadurch, dass die axialen Außenflächen 22 des Dichtungsringes 4' einen axial ausgerichteten umfänglichen Schlitz 28 aufweisen, in den jeweils die konvex geschwungene axiale Außenfläche 14' der Ringe 8', 10' eindringt und die Verdrängung des Dichtungsringvolumens 4' in radialer Richtung begünstigt. Wie schon gemäß Fig. 2 ist auch in der Ausgestaltung gemäß Fig. 3 die Kontaktfläche zwischen den Spannringen 8', 10' und dem Dichtungsring 4' radial in der Mitte des Querschnitts des Dichtungsringes 4'.

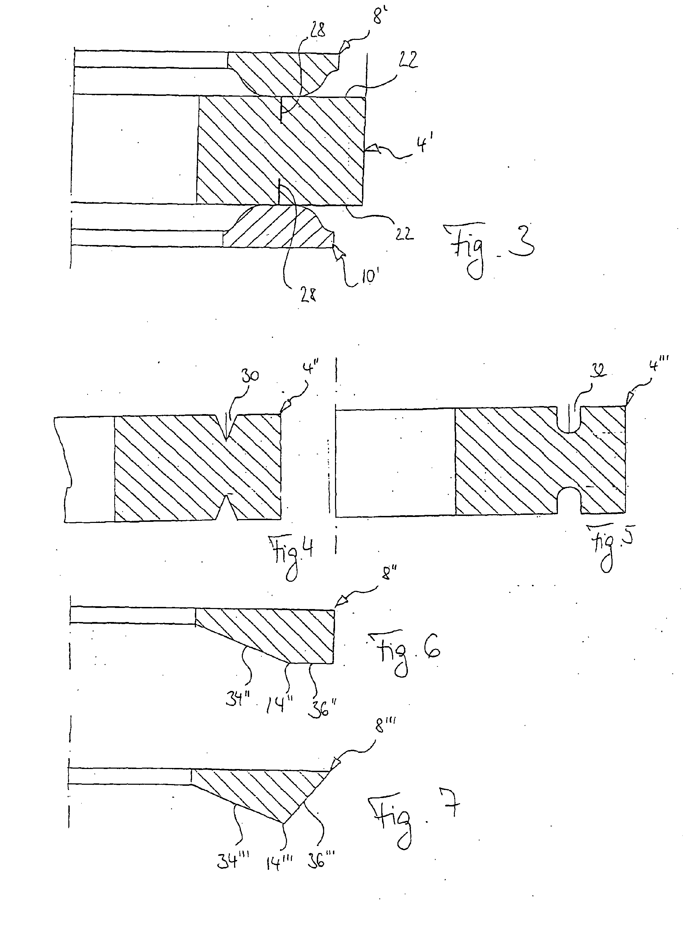

Demgegenüber unterscheiden sich die Dichtungsringe 4" gemäß Fig. 4 und 4'" gemäß Fig. 5 dadurch, dass anstelle des umfänglichen Schlitzes 28 jeweils eine umfängliche Nut 30, 32 ausgebildet ist, von denen die Nut 30 gemäß Fig. 4 einen V-förmigen Querschnitt hat und die Nut 32 gemäß Fig. 5 einen U-förmigen Querschnitt. Darüber hinaus sind die beiden Nuten in radialer Richtung des Querschnitts außermittig angeordnet, so dass mit einem entsprechendem Spannring (nicht dargestellt), der in die Nut 30, 32 eindringt, eine entsprechend radial außermittige Kontaktfläche entsteht.

Fig. 6 und 7 zeigen zwei alternative Ausgestaltungen von Spannringen 8" und 8"', deren konvexe Außenflächen 14" und 14"' von zwei im Querschnitt dachartig aneinander gereihten Ringflächen ausgebildet sind. Gemäß Fig. 6 sind die Ringflächen 34" und 36" noch etwas ausgeprägter stumpfwinklig zueinander ausgerichtet als die Ringflächen 34"' und 36'" gemäß Fig. 7.

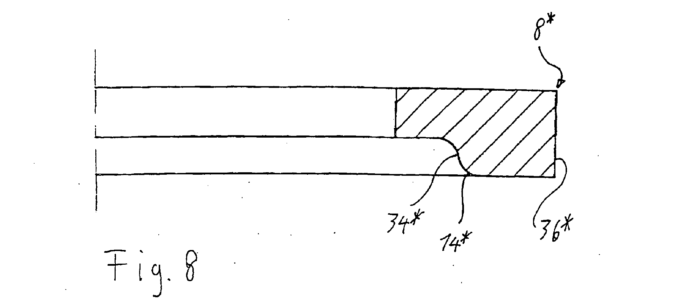

Fig. 8 zeigt eine weitere alternative Ausgestaltung des Spannringes 8*. Seine teilweise konvexe Außenfläche 14* ist im Querschnitt an der zur Mittelachse des Spannringes 8* weisenden Seite 34* rund augebildet. Die nach außen weisende Seite 36* hat die Form eines Zylindermantels.

## Patentansprüche

1. Dichtungsvorrichtung zum abdichtenden Durchführen einer Leitung durch eine Öffnung, insbesondere durch einen in einer Wand ausgebildeten Durchbruch, mit
- einem verformbaren Dichtungselement (4", 4"') mit einer Bohrung, die die Leitung aufnehmen kann, und mit
- einer Spannvorrichtung mit mindestens einem Spannelement (8", 8"',8*) mit einer axial seitlichen Spannoberfläche (14", 14"', 14*) zum Spannen des Spannelements gegen eine axial seitliche Spannoberfläche des Dichtungselements derart, dass die Spannoberfläche (14", 14"', 14*) des Spannelements gegen die axial seitliche Spannoberfläche des Dichtungselements pressbar ist und dabei das Volumen des Dichtungselements radial nach innen und nach außen drängbar ist und so das Dichtungselement im gespannten Zustand an die Leitung und die Innenwand der Öffnung dichtend angepresst werden kann,
wobei die Spannoberfläche des Dichtungselements (4", 4"') und des Spannelements (8", 8"',8*) derart ausgeformt sind, dass durch Verdrängung des Dichtungselements von seinen axialen Seitenflächen die Kontaktfläche zwischen den Spannoberflächen des Dichtungselements und des Spannelements sich beim Spannen des Spannelements gegen das Dichtungselement vergrößert, **dadurch gekennzeichnet, dass** die Kontaktfläche in Richtung der radialen Erstreckung des Querschnitts des Dichtungselements und/oder des Spannelementes außermittig angeordnet ist.

2. Vorrichtung nach Anspruch 1,
**gekennzeichnet durch** zwei Spannelemente, die axial jeweils von einer Seite gegen das Dichtungselement spannbar sind.

3. Vorrichtung nach einem der vorhergehenden Ansprüche,
**dadurch gekennzeichnet, dass** das Dichtungselement und/oder das Spannelement ringförmig sind.

4. Vorrichtung nach einem der vorhergehenden Ansprüche,
**dadurch gekennzeichnet, dass** das Dichtungselement und/oder das Spannelement auf Seiten der Spannoberfläche konvex ausgebildet ist.

5. Vorrichtung nach Anspruch 4,
**dadurch gekennzeichnet, dass** der konvexe Abschnitt im Querschnitt U-förmig, stumpfwinkelig V-förmig, trapezförmig, konvex geschwungen ist, oder mehrere dieser Formelemente aufweist.

6. Vorrichtung nach einem der vorhergehenden Ansprüche,
**dadurch gekennzeichnet, dass** das Dichtungselement in seiner Spannoberfläche eine axial ausgerichtete Nut aufweist, gegenüber welcher die Spannoberfläche des Spannelements liegt und in die Spannoberfläche des Dichtringes beim Spannen eindringt.

7. Vorrichtung nach einem der vorhergehenden Ansprüche,
**dadurch gekennzeichnet, dass** das Dichtungselement in seiner Spannoberfläche einen Schlitz des Dichtungselementes aufweist, gegenüber welchem die Spannoberfläche des Spannelements liegt und in den die Spannoberfläche des Dichtringes beim Spannen eindringt.

## Claims

1. A sealing device for the sealed passage of a line through an orifice, especially through an opening formed in a wall, with
- a deformable sealing member (4", 4"') with a bore which can receive the line, and with
- a clamping device with at least one clamping member (8", 8"', 8*) with an axially lateral clamping surface (14", 14"', 14*) for clamping the clamping member against an axially lateral clamping surface of the sealing member in such a way that the clamping surface (14", 14"', 14*) of the clamping member can be pressed against the axially lateral clamping surface of the sealing member, during which the volume of the sealing member is displaceable radially inwards and outwards and the sealing member can thus be pressed against the line and the inner wall of the orifice so as to form a seal in the clamped state,
wherein the clamping surfaces of the sealing member (4", 4"') and the clamping member (8", 8"', 8*) are formed in such a way that, by displacing the sealing member from its axial side surfaces, the contact surface between the clamping surfaces of the sealing member and the clamping member increases when the clamping member is clamped against the sealing member, **characterised in that** the contact surface is arranged eccentrically in the direction of the radial extent of the cross-section of the sealing member and/or the clamping member.

2. A device according to claim 1, **characterised by** two clamping members which can be axially clamped against the sealing member from each side.

3. A device according to either one of the preceding claims, **characterised in that** the sealing member and/or the clamping member are annular.

4. A device according to any one of the preceding claims, **characterised in that** the sealing member and/or the clamping member are convexly formed on the side of the clamping surface.

5. A device according to claim 4, **characterised in that** the convex portion is U-shaped, in the shape of an obtuse-angled V, trapezoidal or convexly curved in cross-section or has a plurality of these shape elements.

6. A device according to any one of the preceding claims, **characterised in that** the sealing member has an axially orientated groove in its clamping surface, and the clamping surface of the clamping member lies opposite the groove and penetrates the clamping surface of the sealing ring during the clamping process.

7. A device according to any one of the preceding claims, **characterised in that** the sealing member has a slot in its clamping surface, and the clamping surface of the clamping member lies opposite the slot and penetrates the clamping surface of the sealing ring during the clamping process.

## Revendications

1. Dispositif d'étanchéité destiné à faire passer un conduit de manière étanche à travers une ouverture, en particulier à travers un passage réalisé dans une paroi, comportant
- un élément d' étanchéité déformable (4", 4"') avec un alésage, qui peut recevoir le conduit, et
- un dispositif de serrage comportant au moins un élément de serrage (8" , 8"' , 8*) avec une surface de serrage latérale axiale (14", 14"', 14*) destinée à serrer l'élément de serrage contre une surface de serrage latérale axiale de l'élément de serrage de telle sorte que la surface de serrage (14", 14"', 14*) de l'élément de serrage puisse être pressée contre la surface latérale axiale de l'élément d'étanchéité et que ce faisant le volume de l'élément d'étanchéité puisse être refoulé de manière radiale vers l'intérieur et vers l'extérieur et qu'ainsi l'élément d'étanchéité à l'état serré puisse être comprimé de façon étanche contre le conduit et la paroi interne de l'ouverture,
la surface de serrage de l'élément d'étanchéité (4" , 4"') et de l' élément de serrage (8" , 8"' , 8*) étant formée de telle manière qu'en repoussant l'élément d'étanchéité de ses surfaces latérales axiales, la surface de contact située entre les surfaces de serrage de l'élément d'étanchéité et de l'élément de serrage s'agrandit lors du serrage de l'élément d'étanchéité contre l'élément d'étanchéité, **caractérisé en ce que**, la surface de contact est disposée de manière excentrée dans le sens de l'extension radiale de la section transversale de l'élément d'étanchéité et/ou de l'élément de serrage

2. Dispositif selon la revendication 1,
**caractérisé par** deux éléments de serrage, qui peuvent être serrés respectivement de manière axiale contre l'élément d'étanchéité depuis un côté.

3. Dispositif selon l'une quelconque des revendications précédentes,
**caractérisé en ce que** l'élément d'étanchéité et/ou l'élément de serrage sont de forme annulaire.

4. Dispositif selon l'une quelconque des revendications précédentes,
**caractérisé en ce que** l'élément d'étanchéité et/ou l'élément de serrage sont formés de manière convexe sur des côtés de la surface de serrage.

5. Dispositif selon la revendication 4,
**caractérisé en ce que** la section convexe présente une section incurvée de manière convexe, trapézoïdale, en forme de V à angle obtu, en forme de U, ou présente plusieurs de ces éléments de forme.

6. Dispositif selon l'une quelconque des revendications précédentes,
**caractérisé en ce que** l'élément d'étanchéité présente dans sa surface de serrage une rainure orientée de manière axiale, face à laquelle se trouve la surface de serrage de l'élément de serrage et dans laquelle pénètre la surface de serrage de la bague d'étanchéité lors du serrage.

7. Dispositif selon l'une quelconque des revendications précédentes,
**caractérisé en ce que** l'élément d'étanchéité présente dans sa surface de serrage une fente de l'élément d'étanchéité, face à laquelle se trouve la surface de serrage de l'élément de serrage et dans laquelle pénètre la surface de serrage de la bague d'étanchéité lors du serrage.
